# EUROPÄISCHE PATENTANMELDUNG

(11) **EP 3 722 023 A1**
(43) Veröffentlichungstag der Anmeldung: **14.10.2020**
(21) Anmeldenummer: 19167843.2
(22) Anmeldetag: 08.04.2019
(51) Int. Cl.: B22F 1/00, B22F 3/105, B23K 15/00, B23K 26/342, B29C 64/118, B33Y 10/00, B33Y 70/00, B22F 3/10

(54) **ENTGEGENWIRKEN DES VERZUGES VON 3D-GEDRUCKTEN BAUTEILEN**

(71) Anmelder: BASF SE, 67056 Ludwigshafen am Rhein (DE)
(72) Erfinder: Die Erfindernennung liegt noch nicht vor
(74) Vertreter: Ellwanger, Arndt

(57) **Zusammenfassung**

Die vorliegende Erfindung betrifft ein Verfahren zur Herstellung eines dreidimensionalen (3D) Gegenstandes, wobei unter Verwendung eines 3D-Druckverfahrens das eingesetzte Ausgangsmaterial schichtweise zu einem 3D-Gegenstand (3D-gedrucktes Bauteil) gedruckt wird. Beim schichtweisen Drucken wird mindestens eine der Schichten so gedruckt, dass die entsprechende Schicht mindestens einmal im Uhrzeigersinn und mindestens einmal gegen den Uhrzeigersinn gedruckt wird. Die Anzahl der Druckvorgänge pro Schicht im Uhrzeigersinn ist gleich der Anzahl der Druckvorgänge pro Schicht im Gegenuhrzeigersinn. Auf diese Weise kann dem im herkömmlichen 3D-Druckverfahren beobachteten Verzug im gedruckten 3D-Gegenstand vollständig oder zumindest teilweise entgegengewirkt werden. Aus dem so hergestellten 3D-Gegenstand, der vorzugsweise ein 3D-Grünkörper ist, können in weiteren Verfahrensschritten ein 3D-Braunkörper bzw. ein 3D-gesinterter Körper hergestellt werden. Weitere Gegenstände der vorliegenden Erfindung sind die entsprechenden 3D-Gegenstände (Objekte) als solche.

## Beschreibung

Die vorliegende Erfindung betrifft ein Verfahren zur Herstellung eines dreidimensionalen (3D) Gegenstandes, wobei unter Verwendung eines 3D-Druckverfahrens das eingesetzte Ausgangsmaterial schichtweise zu einem 3D-Gegenstand (3D-gedrucktes Bauteil) gedruckt wird. Beim schichtweisen Drucken wird mindestens eine der Schichten so gedruckt, dass die entsprechende Schicht mindestens einmal im Uhrzeigersinn und mindestens einmal gegen den Uhrzeigersinn gedruckt wird. Die Anzahl der Druckvorgänge pro Schicht im Uhrzeigersinn ist gleich der Anzahl der Druckvorgänge pro Schicht im Gegenuhrzeigersinn. Auf diese Weise kann dem im herkömmlichen 3D-Druckverfahren beobachteten Verzug im gedruckten 3D-Gegenstand vollständig oder zumindest teilweise entgegengewirkt werden. Aus dem so hergestellten 3D-Gegenstand, der vorzugsweise ein 3D-Grünkörper ist, können in weiteren Verfahrensschritten ein 3D-Braunkörper bzw. ein 3D-gesinterter Körper hergestellt werden. Weitere Gegenstände der vorliegenden Erfindung sind die entsprechenden 3D-Gegenstände (Objekte) als solche.

Der 3D-Druck als solcher ist mittlerweile ein weitverbreitetes Verfahren, bei dem prinzipiell ein geeignetes Ausgangsmaterial Schicht für Schicht (beispielsweise auf einer Grundplatte) aufgetragen und so dreidimensionale (3D) Gegenstände (auch als Werkstücke, Objekte oder 3D-Druckprodukt bezeichnet) in zahllosen Variationen hinsichtlich Geometrie, Form, Größe und/oder Gestalt erzeugt werden können. Im Rahmen des 3D-Drucks sind mittlerweile mehrere unterschiedliche Arten/Techniken von 3D-Druckverfahren bekannt, wie beispielsweise selektives Laserschmelzen, Elektronenstrahlschmelzen, selektives Lasersintern, Stereolithographie oder das Fused Deposition Modeling (FDM)-Verfahren. Die vorgenannten Verfahren als solche sind dem Fachmann allesamt bekannt, sie unterscheiden sich insbesondere hinsichtlich des Einsatzes der spezifischen Ausgangsstoffe und/oder der speziellen Verfahrensbedingungen, mit denen die Ausgangsstoffe in das gewünschte 3D-Produkt verwandelt werden (beispielsweise Verwendung spezieller Laser, Elektronenstrahlen oder spezieller Aufschmelz-/Extrusionstechniken). Häufig sind die kommerziell erhältlichen 3D-Drucker auf das gewünschte 3D-Druckverfahren abgestimmt.

Insbesondere aufgrund ihrer relativ niedrigen Kosten sind 3D-Extrusionsverfahren in der Praxis sehr weit verbreitet. Dies gilt insbesondere für das sogenannte 3D-Schmelzschichtdruckverfahren, das auch als Fused Deposition Modeling (FDM)-Verfahren bzw. Fused Filament Fabrication (FFF)-Verfahren bezeichnet wird.

DE 690 33 809 T2 (basierend auf der US-Priorität 429012 von 1989) ist eines der ersten Patente, das ein Gerät und Verfahren zum Erzeugen dreidimensionaler Objekte auf Basis des FDM-Verfahrens beschreibt. Darin wird eine Vorrichtung sowie ein zugehöriges Verfahren zum Bilden eines dreidimensionalen Objektes mit einer vorbestimmten Konstruktion offenbart, wobei insbesondere ein Modell oder Gegenstand durch die Ablagerung mehrerer Lagen eines Materials in einem fluiden Zustand auf einen Träger hergestellt wird. Das Material wird so ausgewählt und seine Temperatur wird so gesteuert, dass es sich im Wesentlichen sofort nach dem Extrudieren oder der Abgabe auf einen Träger beim Aufbau der mehreren Lagen, die den gewünschten Gegenstand bilden, verfestigt. Wie insbesondere aus den Figuren sowie der zugehörigen Figurenbeschreibung dieses Dokumentes ersichtlich, ist bei den darin offenbarten Vorrichtungen der Druckkopf nur in Z-Richtung (bezogen auf ein kartesisches Koordinatensystem) beweglich, während er hingegen in X- und Y-Richtung fest ist. Die dreidimensionale Form des dabei hergestellten 3D-Produktes wird dadurch erzielt, dass die Basisplatte, die das 3D-Produkt während des Herstellungsprozesses aufnimmt, in X- und Y-Richtung unter Verwendung eines Antriebssystems, das mehrere Motoren umfasst, beweglich gehalten wird. Die vertikale Bewegung des Druckkopfes in Z-Richtung wird durch ein separates Antriebssystem gesteuert.

DE 10 2015 111 677 A1 offenbart eine 3D-Druckvorrichtung mit einer beheizbaren Kammer, in welcher dreidimensionale Modelle gedruckt werden. In der beheizbaren Kammer ist eine Grundplatte angeordnet, auf der die 3D-Modelle gedruckt werden. Weiterhin enthält die 3D-Druckvorrichtung wenigstens einen Druckkopf und wenigstens zwei Antriebseinheiten zur Veränderung der Position des Druckkopfes in einer parallel zur Grundplatte verlaufenden Ebene. Die 3D-Druckvorrichtung ist dadurch gekennzeichnet, dass wenigstens eine Antriebseinheit durch eine in dieser Ebene rotierbare Isolierung von der beheizbaren Kammer getrennt ist. Diese 3D-Druckvorrichtungen eignen sich insbesondere zum Einsatz in 3D-Schmelzschicht-Herstellungsverfahren, also FDM-3D-Drucktechniken.

Ein weiterer 3D-Drucker zum Einsatz in FDM-3D-Druckverfahren wird in US 2018/0056608 A1 beschrieben. Die darin beschriebenen 3D-Drucker enthalten eine Druckkopfeinheit, die den Druckkopf als solchen inklusive der Extrusionsdüse umfassen, und darüber hinaus eine zusätzliche Vorrichtungseinheit. Diese zusätzliche Vorrichtungseinheit, die mit dem Druckkopf als solchem verschmolzen ist, kann variabel gestaltet werden, beispielsweise können dort ein Gebläse, eine Lichteinheit, ein Sensor oder ein Laser enthalten sein. Die Druckkopfeinheit wird mit Hilfe einer Antriebseinheit in der XY-Ebene bewegt, während das 3D-Druckprodukt schichtweise auf einer Platte aufgebaut wird, die mit Hilfe eines Bewegungsmechanismus in Z-Richtung beweglich ist. Im Rahmen einer anderen Ausführungsform können diese Bewegungsrichtungen jedoch vertauscht sein. Die Platte zur Aufnahme des 3D-Produktes kann dort in einer XY-Ebene bewegt werden, während die Druckkopfeinheit entlang der Z-Richtung bewegt wird.

WO 2017/009190 betrifft ein spezielles Filament, das ein Kernmaterial enthält, das wiederum mit einer Ummantelungsschicht umgeben ist. Das Kernmaterial umfasst ein anorganisches Pulver sowie ein Polymer als Binder. Die Ummantelung enthält zu mindestens 75 Vol.-% mindestens ein thermoplastisches Polymer. Diese speziellen Filamente werden durch Coextrusion des Kernmaterials und des Ummantelungsmaterials hergestellt. Diese Filamente werden insbesondere im Rahmen eines FFF-3D-Druckverfahrens (also eines FDM-3D-Verfahrens) zur Herstellung eines 3D-Grünkörpers eingesetzt, wobei das auf einer Spule aufgewickelte Filament in einen 3D-Druckkopf geführt wird, wo es über die Schmelztemperatur erhitzt wird und es in erhitztem/geschmolzenem Zustand schichtweise in den 3D-Grünkörper verwandelt wird. In diesem Verfahren können beliebige 3D-Drucker eingesetzt werden, die sich zur Durchführung eines FDM-3D-Druckverfahrens eignen.

Die internationale Patentanmeldung PCT/EP 2018/070810 betrifft eine Düse, die mindestens ein statisches Mischelement umfasst, wobei die Düse und das mindestens eine statische Mischelement gemeinsam/als einkomponentiger Gegenstand durch ein selektives Laserschmelzverfahren (SLM-Verfahren) hergestellt werden. Eine solche Düse wiederum wird im Rahmen eines 3D-Extrusionsdruckverfahrens, insbesondere in einem 3D-Schmelzschichtdruckverfahren (FDM-3D-Drucktechnik), eingesetzt.

Aus dem vorstehend diskutierten Stand der Technik ist es offensichtlich, dass es allein für die FDM-3D-Drucktechnik eine Vielzahl von unterschiedlichen Verfahrensvarianten, beispielsweise hinsichtlich des eingesetzten Druckers, der eingesetzten Ausgangsmaterialien und/oder der konkreten 3D-Druckdurchführung gibt. Sofern bei einem 3D-Druckverfahren, insbesondere bei der FDM-3D-Drucktechnik, ein Ausgangsmaterial eingesetzt wird, das neben polymeren, organischen Anteilen auch anorganische Anteile wie Metalle und/oder Keramiken enthält, können die im Anschluss an das eigengliche 3D-Druckverfahren erhaltenen 3D-Druckobjekte, die häufig auch als 3D-Grünkörper (Grünlinge) bezeichnet werden, weiteren Verfahrensschritten unterzogen werden, wobei ausgehend von 3D-Grünkörpern zunächst ein 3D-Braunkörper und anschließend ein 3D-gesinterter Körper hergestellt werden können.

Die einzelnen Schichten des 3D-Druckgegenstandes werden in den vorstehend beschriebenen Verfahren in der Regel dadurch erhalten, dass das entsprechende Ausgangsmaterial, insbesondere Filamente, als Strang auf einen geeigneten Träger (Grundplatte) schichtweise aufgebracht werden. Dabei kann entweder der Druckkopf oder die Grundplatte in X-, Y- oder Z-Richtung bewegt werden. Pro zu druckende Schicht wird die jeweils gewünschte geometrische Form der entsprechenden Schicht dadurch erzielt, dass ein einziger Strang so lange ausgedruckt wird, bis entweder der Druckkopf des Druckers und/oder die Ausgangsplatte wieder in ihrer Ausgangsposition angekommen ist. Bezogen auf das fertige 3D-Druckprodukt wird der jeweilige Strang der Einzelschicht entweder im Uhrzeiger- oder im Gegenuhrzeigersinn ausgedruckt.

Sobald ein solcher Strang (mit einem Teilbereich) auf der Grundplatte abgelegt wird, beginnt dieser auszukühlen. In Abhängigkeit vom spezifischen Wärmeausdehnungskoeffizienten des verwendeten Ausgangmaterials fängt der Strang an, sich zusammenzuziehen. Dieser Effekt wird umso stärker, je dicker die jeweiligen Stränge/Wandungen der entsprechenden Bauteile sind. Je mehr Schichten übereinander gedruckt werden, umso höher ist der jeweilige Verzug der einzelnen Schichten untereinander. Dies bedeutet, dass insbesondere bei 3D-Druckteilen mit Ecken mit steigender Schichtanzahl/Höhe des 3D-Druckobjektes ein Verzug feststellbar ist. Dieser Verzug tritt insbesondere dann verstärkt auf, wenn als Ausgangsmaterialien metallhaltige und/oder keramikhaltige Materialien, insbesondere Filamente, eingesetzt werden und/oder die Ausgangsmaterialien im Anschluss an den eigentlichen 3D-Druckvorgang weiteren Bearbeitungsschritten unterzogen werden, insbesondere Entbindungsschritten (zur Herstellung eines 3D-Braunkörpers) sowie eines Sinterungsschrittes (zur Herstellung eines 3D-gesinterten Körpers).

Die der vorliegenden Erfindung zugrunde liegende Aufgabe besteht in der Bereitstellung eines neuen Verfahrens zur Herstellung eines 3D-Gegenstandes unter Verwendung eines 3D-Druckverfahrens, insbesondere die Verwendung eines 3D-Schmelzschichtdruckverfahrens (FDM-3D-Drucktechnik).

Gelöst wird diese Aufgabe durch ein Verfahren zur Herstellung eines dreidimensionalen (3D) Gegenstandes unter Verwendung eines dreidimensionalen (3D) Druckverfahrens umfassend die folgenden Schritte a) bis c):
a) Bereitstellung eines Ausgangsmaterials und eines dreidimensionalen (3D) Druckers,
b) Einspeisen des Ausgangsmaterials in den Druckkopf des 3D-Druckers,
c) schichtweises Drucken des Ausgangsmaterials auf eine Grundplatte unter Ausbildung des 3D-Gegenstandes, wobei mindestens eine der Schichten so gedruckt wird, dass die entsprechende Schicht mindestens einmal im Uhrzeigersinn und mindestens einmal gegen den Uhrzeigersinn gedruckt wird und die Anzahl der Druckvorgänge pro Schicht im Uhrzeigersinn gleich der Anzahl der Druckvorgänge pro Schicht gegen den Uhrzeigersinn ist.

Das erfindungsgemäße Verfahren ist vorteilhaft, weil dadurch 3D-Gegenstände erhalten werden können, die gar keinen oder einen deutlich geringeren Verzug (Verdrehen) aufweisen im Vergleich zu 3D-Druckgegenständen nach Verfahren gemäß dem Stand der Technik. Vorzugsweise wird der Verzug um mindestens 85 % gegenüber dem Stand der Technik reduziert.

Mit dem erfindungsgemäßen Verfahren lassen sich in vorteilhafter Weise auch sehr komplexe oder sehr hohe (in Bezug zur Z-Richtung) 3D-Gegenstände ausdrucken, ohne dass diese 3D-Gegenstände einen Verzug in nennenswerter Weise aufweisen. Die Reduzierung bzw. Vermeidung des Verzugs ist im erfindungsgemäßen Verfahren in vorteilhafter Weise insbesondere dann feststellbar, wenn als Ausgangsmaterial Filamente mit Metall- und/oder Keramikanteilen eingesetzt werden und/oder wenn ein sogenanntes 3D-Schmelzschichtverfahren (FDM-3D-Drucktechnik) eingesetzt wird und/oder wenn im Anschluss an den eigentlichen 3D-Druckprozess ein Entbindungsschritt unter Herstellung eines 3D-Braunkörpers sowie insbesondere ein nachfolgender Sinterungsschritt unter Herstellung eines 3D-gesinterten Körpers durchgeführt wird.

Das erfindungsgemäße Verfahren kann auf relativ einfache Weise auch in großem Umfang bzw. computergesteuert und somit auch unabhängig von einer etwaigen speziellen Größe des 3D-Druckgegenstandes durchgeführt werden. Beispielsweise kann eine gängige 3D-Slicer-Software (Slicer-Programme) so umprogrammiert werden, dass die zu druckenden einzelnen Schichten eines beliebigen 3D-Druckgegenstandes so ausgedruckt werden, dass die jeweilige Geometrie der entsprechenden Schicht einmal im Uhrzeigersinn und einmal gegen den Uhrzeigersinn gedruckt wird. Die Anzahl der Druckvorgänge pro Schicht im Uhrzeigersinn muss dabei gleich der Anzahl der Druckvorgänge pro Schicht gegen den Uhrzeigersinn sein. Dabei können die jeweiligen Schritte auch mehrfach wiederholt werden. Die jeweiligen Stränge (auch als Wandung bezeichnet), die im Uhrzeigersinn bzw. im Gegenuhrzeigersinn ausgedruckt werden, berühren sich auf jeweils einer Seite des entsprechenden Stranges. Sofern der Druckvorgang im Uhrzeigersinn sowie im Gegenuhrzeigersinn mehrfach ausgeführt wird, ist es wichtig, dass die einzelnen Stränge immer abwechselnd im Uhrzeigersinn und im Gegenuhrzeigersinn ausgedruckt werden.

Im Rahmen der vorliegenden Erfindung beziehen sich (soweit nicht anders angegeben) alle Richtungsangaben, wie X-Richtung, Y-Richtung oder Z-Richtung sowie XY-Ebene, auf ein kartesisches Koordinatensystem im dreidimensionalen Raum. Dies bedeutet, dass die drei Richtungsachsen (X-Achse, Y-Achse und Z-Achse) jeweils orthogonal zueinander stehen, also jeweils einen 90°-Winkel zueinander ausbilden. Die Z-Achse (Z-Richtung) wird auch als "vertikale Achse" bezeichnet. XY-Ebenen können auch als horizontale Ebenen bezeichnet werden, wobei mehrere XY-Ebenen in vertikaler Richtung (also entlang der Z-Achse) parallel zueinander angeordnet sein können. Bewegungen entlang der Z-Achse können auch als "nach oben" bzw. "nach unten" bezeichnet werden.

Nachfolgend wird die vorliegende Erfindung näher definiert.

Ein erster Gegenstand der vorliegenden Erfindung ist ein Verfahren zur Herstellung eines dreidimensionalen (3D) Gegenstandes unter Verwendung eines dreidimensionalen (3D) Druckverfahrens umfassend die folgenden Schritte a) bis c):
a) Bereitstellung eines Ausgangsmaterials und eines dreidimensionalen (3D) Druckers,
b) Einspeisen des Ausgangsmaterials in den Druckkopf des 3D-Druckers,
c) schichtweises Drucken des Ausgangsmaterials auf eine Grundplatte unter Ausbildung des 3D-Gegenstandes, wobei mindestens eine der Schichten so gedruckt wird, dass die entsprechende Schicht mindestens einmal im Uhrzeigersinn und mindestens einmal gegen den Uhrzeigersinn gedruckt wird und die Anzahl der Druckvorgänge pro Schicht im Uhrzeigersinn gleich der Anzahl der Druckvorgänge pro Schicht gegen den Uhrzeigersinn ist.

Das erfindungsgemäße Verfahren kann prinzipiell mit jedem beliebigen, dem Fachmann bekannten dreidimensionalen (3D) Druckverfahren durchgeführt werden. In der wissenschaftlichen sowie Patentliteratur sind bereits zahlreiche unterschiedliche 3D-Druckverfahren beschrieben, wie beispielsweise selektives Laserschmelzen, Elektronenstrahlschmelzen, selektives Lasersintern, Stereolithographie oder das 3D-Schmelzschichtdruckverfahren, das auch als FDM-Verfahren bzw. FFF-Verfahren bezeichnet wird. All diese dem Fachmann bekannten 3D-Druckverfahren können im erfindungsgemäßen Verfahren eingesetzt werden.

Erfindungsgemäß ist es bevorzugt, dass das 3D-Druckverfahren ein Extrusionsverfahren, insbesondere ein 3D-Schmelzschichtdruckverfahren (FDM-3D-Drucktechnik) ist und/oder der 3D-Drucker ein Extrusionsdrucker, insbesondere ein Extrusionsdrucker zur Durchführung eines 3D- Schmelzschichtdruckverfahrens (FDM-3D-Drucktechnik) ist.

In Schritt a) des erfindungsgemäßen Verfahrens erfolgt die Bereitstellung eines Ausgangsmaterials und eines dreidimensionalen (3D) Druckers. Ausgangsmaterialien als solche sowie 3D-Drucker als solche sind dem Fachmann bekannt. Erfindungsgemäß kann prinzipiell jedes beliebige Ausgangsmaterial und/oder jeder beliebige 3D-Drucker eingesetzt werden. Dem Fachmann ist bekannt, dass die Ausgangsmaterialien und/oder der 3D-Drucker auf das zu verwendete 3D-Druckverfahren abzustimmen sind, in anderen Worten ausgedrückt, müssen das Ausgangsmaterial sowie der entsprechende 3D-Drucker mit dem zu verwendeten 3D-Druckverfahren kompatibel sein. Wenn beispielsweise das erfindungsgemäße bevorzugte 3D-Schmelzschichtdruckverfahren durchgeführt werden soll, weiß der Fachmann, dass er das Ausgangsmaterial sowie den 3D-Drucker so auszuwählen hat, dass sie in einem 3D-Schmelzschichtdruckverfahren verarbeitet werden können. Vorzugsweise werden in Schritt a) der vorliegenden Erfindung mindestens ein Ausgangsmaterial und/oder mindestens ein 3D-Drucker eingesetzt, die in einem 3D-Schmelzschichtdruckverfahren verwendet werden können.

Erfindungsgemäß ist es bevorzugt, dass das Ausgangsmaterial ein Filament ist, vorzugsweise ein Filament, das mindestens ein anorganisches Pulver und mindestens ein Polymer enthält. Geeignete Filamente sind beispielsweise in WO 2017/009190 offenbart. Erfindungsgemäß können auch unterschiedliche Arten von Filamenten als Ausgangsmaterial eingesetzt werden. Vorzugsweise wird im Rahmen des erfindungsgemäßen Verfahrens jedoch für die Herstellung des entsprechenden 3D-Gegenstandes in den einzelnen Schichten jeweils dasselbe Filament eingesetzt.

Sofern ein Filament eingesetzt wird, das mindestens ein anorganisches Pulver enthält, ist es erfindungsgemäß bevorzugt, dass das mindestens eine anorganische Pulver ein sinterbares anorganisches Pulver ist, vorzugsweise ein Metall, eine Metalllegierung oder ein keramisches Material, mehr bevorzugt ein Metall, besonders bevorzugt ein Metall ausgewählt aus Titanium, Eisen oder Carbonyleisenpulver.

Sofern das eingesetzte Filament mindestens ein Polymer enthält, ist es bevorzugt, dass das entsprechende Polymer ein thermoplastisches Polymer ist. Mehr bevorzugt ist das mindestens eine Polymer Polyoxymethylen (POM) oder ein Polyolefin (PO) ist, vorzugsweise ein Polyoxymethylen.

In einer bevorzugten Ausführungsform der vorliegenden Erfindung wird als Ausgangsmaterial ein Filament eingesetzt, das ein Kern-Schale-Filament ist, vorzugsweise ein Kern-Schale-Filament, das als Kernmaterial i) 30 bis 80 Vol-% des mindestens einen anorganischen Pulvers, ii) 20 bis 70 Vol-% von mindestens einem Binder enthaltend mindestens ein Polymer und iii) 0 bis 20 Vol-% von mindestens einem Additiv (alle vorgenannten Volumenangaben beziehen sich auf das Gesamtvolumen des Kernmaterials) und das als Schalenmaterial iv) 75 bis 100 Vol-% von mindestens einem thermoplastischen Polymer, v) 0 bis 20 Vol-% von mindestens einem anorganischen Pulver und iii) 0 bis 25 Vol% von mindestens einem Additiv (alle vorgenannten Volumenangaben beziehen sich auf das Gesamtvolumen des Schalenmaterials) enthält.

Weiterhin ist es erfindungsgemäß bevorzugt, dass in Schritt a) das Ausgangsmaterial als auf einer Rolle aufgewickeltes Filament bereitgestellt wird.

Für das erfindungsgemäße Verfahren geeignete 3D-Drucker sind beispielsweise in DE 10 2015 111 677 sowie insbesondere in US 2018/0056608 A1 beschrieben. Geeignete 3D-Drucker umfassen in der Regel ein Gehäuse, mindestens einen Druckkopf sowie mindestens eine Antriebseinheit zur Steuerung des Druckkopfs. Geeignete 3D-Drucker können darüber hinaus auch diverse Vorrichtungselemente wie Gestänge usw. enthalten, die zur Befestigung von beispielsweise dem Druckkopf dienen. Weiterhin können geeignete 3D-Drucker auch Vorrichtungseinrichtungen zum Transport des Ausgangsmaterials in den Drucker, insbesondere in den Druckkopf sowie gegebenenfalls auch entsprechende Vorratsbehälter für das Ausgangsmaterial enthalten. Gegebenenfalls kann ein im erfindungsgemäßen Verfahren eingesetzter 3D-Drucker über zwei oder mehrere Druckköpfe und/oder zwei oder mehrere Düsen verfügen.

Erfindungsgemäß ist es bevorzugt, dass der eingesetzte 3D-Drucker einen Druckkopf aufweist, wobei der Druckkopf des 3D-Druckers wiederum eine Düse enthält. Die Düse als solche ist dem Fachmann bekannt, beispielsweise kann sie ein konische Form aufweisen, die in handelsüblichen 3D-Drucker als Standarddruckdüse verwendet werden. Die Düsen können gegebenenfalls eine Mischvorrichtung, beispielsweise über ein statisches Mischelement, aufweisen.

In einer Ausführungsform der vorliegenden Erfindung enthält der Druckkopf des 3D-Druckers eine Düse, vorzugsweise eine Düse mit einem statischen Mischelement, insbesondere eine Düse mit einem statischen Mischelement, die als einkomponentigen Stück durch selektives Laserschmelzen (SLM) hergestellt ist.

In Schritt b) des erfindungsgemäßen Verfahrens erfolgt das Einspeisen des Ausgangsmaterials in den Druckkopf des 3D-Druckers. Die Durchführung des erfindungsgemäßen Schrittes b) als solchen bzw. gegebenenfalls erforderliche Hilfsmittel zur Einspeisung des Ausgangsmaterials sind dem Fachmann bekannt.

Erfindungsgemäß ist es bevorzugt, dass in Schritt b) das Ausgangsmaterial, insbesondere das Filament, auf eine Temperatur oberhalb des Schmelzpunktes des im Ausgangsmaterial enthaltenen Binders erhitzt wird, vorzugsweise ist die Temperatur im Bereich von 100 bis 300 °C, insbesondere im Bereich von 140 bis 240 °C. Als Binder werden in diesem Fall die im entsprechenden Ausgangsmaterial enthaltenen Polymere bezeichnet, insbesondere thermoplastische Polymere.

In Schritt c) des erfindungsgemäßen Verfahrens erfolgt ein schichtweises Drucken des Ausgangsmaterials auf eine Grundplatte unter Ausbildung des 3D-Gegenstandes, wobei mindestens eine der Schichten so gedruckt wird, dass die entsprechende Schicht mindestens einmal im Uhrzeigersinn und mindestens einmal gegen den Uhrzeigersinn gedruckt wird und die Anzahl der Druckvorgänge pro Schicht im Uhrzeigersinn gleich der Anzahl der Druckvorgänge pro Schicht gegen den Uhrzeigersinn ist.

Mit dem erfindungsgemäßen Verfahren können in Schritt c) beliebige 3D-Gegenstände gedruckt werden. Dabei ist es möglich, dass der entsprechende 3D-Gegenstand vollständig nach dem erfindungsgemäßen Verfahren hergestellt/gedruckt wird oder dass nur Teile bzw. Bereiche eines beliebigen 3D-Gegenstands nach dem erfindungsgemäßen Verfahren hergestellt werden, während hingegen andere Teile eines solchen 3D-Gegenstandes nach einem anderen bzw. herkömmlichen 3D-Druckverfahren hergestellt/gedruckt werden. Das Drucken des 3D-Gegenstandes gemäß erfindungsgemäßem Schritt c) erfolgt auf eine dem Fachmann bekannte Grundplatte. Nach Beendigung des 3D-Druckprozesses wird der entsprechend hergestellte 3D-Gegenstand vorzugsweise von der Grundplatte wieder entfernt. Theoretisch ist es auch denkbar, dass der 3D-Gegenstand auf der Grundplatte verbleibt, was in der Praxis allerdings keine Rolle spielt. Verfahren zum Entfernen des bedruckten 3D-Gegenstandes von der Grundplatte sind dem Fachmann bekannt.

Erfindungsgemäß ist es bevorzugt, dass in Schritt c) mindestens 50 % der Schichten, vorzugsweise mindestens 95 % der Schichten, insbesondere jede Schicht, so gedruckt werden, dass die entsprechende Schicht mindestens einmal im Uhrzeigersinn und mindestens einmal gegen den Uhrzeigersinn gedruckt wird und die Anzahl der Druckvorgänge pro Schicht im Uhrzeigersinn gleich der Anzahl der Druckvorgänge pro Schicht gegen den Uhrzeigersinn ist.

Die Anzahl der Druckvorgänge pro Schicht ist prinzipiell beliebig, Voraussetzung ist jedoch, dass sich die Anzahl der Druckvorgänge pro Schicht im Uhrzeigersinn nicht von der Anzahl der Druckvorgänge pro Schicht gegen den Uhrzeigersinn unterscheidet. Vorzugsweise ist in Schritt c) die Anzahl der Druckvorgänge pro Schicht im Uhrzeigersinn und die Anzahl der Druckvorgänge gegen den Uhrzeigersinn jeweils gleich 1 oder 2, vorzugsweise jeweils gleich 1. Weiterhin ist es erfindungsgemäß bevorzugt, dass im erfindungsgemäßen Verfahren in allen gedruckten Schichten die Anzahl der Druckvorgänge im Uhrzeigersinn mit der Anzahl der Druckvorgänge gegen den Uhrzeigersinn gleich ist.

Weiterhin ist es bevorzugt, dass im erfindungsgemäßen Schritt c) das Ausgangsmaterial in Strangform gedruckt wird, wobei der Strang des Ausgangsmaterials, das in der entsprechenden Schicht im Uhrzeigersinn gedruckt wird, mit dem Strang des Ausgangsmaterials, das in der einsprechenden Schicht gegen den Uhrzeigersinn gedruckt wird, auf jeweils einer Seite des entsprechenden Stranges in direktem Kontakt miteinander stehen.

Ebenso ist es bevorzugt, dass im Fall von zwei oder mehr Druckvorgängen pro Schicht jeweils im Uhrzeigersinn und gegen den Uhrzeigersinn, die Abfolge der Druckvorgänge so ist, das abwechselnd ein Druckvorgang im Uhrzeigersinn auf einen Druckvorgang gegen den Uhrzeigersinn folgt.

Die mit dem erfindungsgemäßen Verfahren hergestellten 3D-Gegenstände können prinzipiell beliebige Formen sowohl hinsichtlich der Größe und/oder Geometrie annehmen. Erfindungsgemäß ist es bevorzugt, dass der in Schritt c) gedruckte 3D-Gegenstand in mindestens einer Schicht mindestens teilweise eine Geometrie ausbildet, die mindestens eine Ecke aufweist, vorzugsweise bildet der 3D-Gegenstand in jeder Schicht mindestens teilweise, mehr bevorzugt vollständig, eine Geometrie aus, die mindestens eine Ecke aufweist.

Erfindungsgemäß ist es somit möglich, dass Bereiche bzw. einzelne Schichten des 3D-Gegenstandes keine Geometrie aufweist, die auf Ecken basiert, sondern die Geometrie/Form dieser Bereiche beispielsweise rund, gebogen und/oder wellenförmig ist. Die einzelnen Schichten des entsprechenden 3D-Gegenstandes können sich hinsichtlich ihrer Geometrie auch unterscheiden. Vorzugsweise werden mit dem erfindungsgemäßen Verfahren jedoch Schichten bzw. 3D-Gegenstände gedruckt, die keine runden, gebogenen oder wellenförmigen Bereiche enthalten. Vorzugsweise bildet der 3D-Gegenstand in mindestens einer Schicht, vorzugsweise in jeder Schicht, eine Geometrie aus, die vollständig oder zumindest teilweise, vorzugsweise vollständig, als Vieleck, insbesondere als Dreieck, Viereck, Fünfeck oder Sechseck, ausgebildet ist. Weiterhin ist es bevorzugt, dass der 3D-Gegenstand als Quader ausgebildet ist. Ebenso ist es erfindungsgemäß bevorzugt, dass jede Schicht des 3D-Gegenstands die gleiche Geometrie ausbildet.

In einer bevorzugten Ausführungsform der vorliegenden Erfindung ist der in Schritt c) ausgebildete 3D-Gegenstand ein 3D-Grünkörper. Im erfindungsgemäßen Verfahren wird in Schritt c) insbesondere dann ein 3D-Grünkörper erhalten, sofern als Ausgangsmaterial ein Filament eingesetzt wird, das mindestens ein anorganisches Pulver enthält, wobei das anorganische Pulver vorzugsweise ein Metall, eine Metallegierung oder ein keramisches Material ist.

In der Praxis erfolgt die Steuerung des erfindungsgemäßen 3D-Druckverfahrens und/oder des 3D-Druckers in der Regel rechnergesteuert. Demzufolge ist es erfindungsgemäß bevorzugt, dass das 3D-Druckverfahren und/oder der 3D-Drucker mit mindestens einem Computer gesteuert wird, vorzugsweise unter Verwendung von mindestens einer Slicersoftware. Die Slicersoftware als solche, die insbesondere zur konkreten Ausgestaltung des 3D-Druckvorganges eingesetzt wird, ist dem Fachmann bekannt und kommerziell erhältlich oder kann durch (simples) Umprogrammieren von kommerziell erhältlicher Slicersoftware von einem Fachmann selbst hergestellt werden.

In einer bevorzugten Ausführungsform der vorliegenden Erfindung wird im Anschluss an Schritt c) ein Schritt d) durchgeführt wird, wobei aus dem in Schritt c) gedruckten 3D-Gegenstand, vorzugsweise aus dem 3D-Grünkörper, Materialien herausgelöst werden unter Ausbildung eines 3D-Braunkörpers.

Im Rahmen dieser Ausführungsform ist es bevorzugt, dass
i) Polymeranteile und/oder Binderanteile aus dem 3D-Gegenstand herausgelöst werden und/oder
ii) das Herauslösen durch Säurebehandlung und/oder unterhalb des Schmelzpunkte der Polymer- oder der Binderanteile erfolgt.

In einer weiteren bevorzugten Ausführungsform der vorliegenden Erfindung wird im Anschluss an Schritt d) ein Schritt e) durchgeführt, wobei der in Schritt d) erhaltene 3D-Braunkörper einem Sinterungsprozess unterzogen wird unter Erhalt eines 3D-gesinterten Körpers.

Ein weiterer Gegenstand der vorliegenden Erfindung ist ein 3D-Gegenstand als solcher, erhältlich nach dem vorstehend beschriebenen erfindungsgemäßen Verfahren zur Herstellung eines dreidimensionalen Gegenstandes. Vorzugsweise ist der 3D-Gegenstand ein 3D-Grünkörper.

Ein weiterer Gegenstand der vorliegenden Erfindung ist somit auch ein 3D-Braunkörper als solcher, der mit dem vorstehend beschriebenen erfindungsgemäßen Verfahren unter zusätzlicher Berücksichtigung des optionalen Schrittes d) durchgeführt wird.

Ein weiterer Gegenstand der vorliegenden Erfindung ist somit auch ein 3D-gesinterter Körper als solcher, erhältlich nach dem vorstehend beschriebenen erfindungsgemäßen Verfahren unter zusätzlicher Berücksichtigung der beiden optionalen Schritt d) und e).

## Patentansprüche

1. Verfahren zur Herstellung eines dreidimensionalen (3D) Gegenstandes unter Verwendung eines dreidimensionalen (3D) Druckverfahrens umfassend die folgenden Schritte a) bis c):
a) Bereitstellung eines Ausgangsmaterials und eines dreidimensionalen (3D) Druckers,
b) Einspeisen des Ausgangsmaterials in den Druckkopf des 3D-Druckers,
c) schichtweises Drucken des Ausgangsmaterials auf eine Grundplatte unter Ausbildung des 3D-Gegenstandes, wobei mindestens eine der Schichten so gedruckt wird, dass die entsprechende Schicht mindestens einmal im Uhrzeigersinn und mindestens einmal gegen den Uhrzeigersinn gedruckt wird und die Anzahl der Druckvorgänge pro Schicht im Uhrzeigersinn gleich der Anzahl der Druckvorgänge pro Schicht gegen den Uhrzeigersinn ist.

2. Verfahren gemäß Anspruch 1, **dadurch gekennzeichnet, dass** das 3D-Druckverfahren ein Extrusionsverfahren, insbesondere ein 3D-Schmelzschichtdruckverfahren (FDM-3D-Drucktechnik) ist und/oder der 3D-Drucker ein Extrusionsdrucker, insbesondere ein Extrusionsdrucker zur Durchführung eines 3D- Schmelzschichtdruckverfahrens (FDM-3D-Drucktechnik) ist.

3. Verfahren gemäß Anspruch 1 oder 2, **dadurch gekennzeichnet, dass** das Ausgangsmaterial ein Filament ist, vorzugsweise ein Filament, das mindestens ein anorganisches Pulver und mindestens ein Polymer enthält.

4. Verfahren gemäß einem der Ansprüche 1 bis 3, **dadurch gekennzeichnet, dass**
i) das mindestens eine anorganische Pulver ein sinterbares anorganisches Pulver ist, vorzugsweise ein Metall, eine Metalllegierung oder ein keramisches Material, mehr bevorzugt ein Metall, besonders bevorzugt ein Metall ausgewählt aus Titanium, Eisen oder Carbonyleisenpulver, und/oder
ii) das mindestens eine Polymer ein Polyoxymethylen (POM) oder ein Polyolefin (PO) ist, vorzugsweise ein Polyoxymethylen, und/oder
iii) das Filament ein Kern-Schale-Filament ist, vorzugsweise ein Kern-Schale-Filament, das als Kernmaterial i) 30 bis 80 Vol-% des mindestens einen anorganischen Pulvers, ii) 20 bis 70 Vol-% von mindestens einem Binder enthaltend mindestens ein Polymer und iii) 0 bis 20 Vol-% von mindestens einem Additiv (alle vorgenannten Volumenangaben beziehen sich auf das Gesamtvolumen des Kernmaterials) und das als Schalenmaterial iv) 75 bis 100 Vol-% von mindestens einem thermoplastischen Polymer, v) 0 bis 20 Vol-% von mindestens einem anorganischen Pulver und iii) 0 bis 25 Vol% von mindestens einem Additiv (alle vorgenannten Volumenangaben beziehen sich auf das Gesamtvolumen des Schalenmaterials) enthält.

5. Verfahren gemäß einem der Ansprüche 1 bis 4, **dadurch gekennzeichnet, dass**
i) in Schritt c) mindestens 50 % der Schichten, vorzugsweise mindestens 95 % der Schichten, insbesondere jede Schicht, so gedruckt werden, dass die entsprechende Schicht mindestens einmal im Uhrzeigersinn und mindestens einmal gegen den Uhrzeigersinn gedruckt wird und die Anzahl der Druckvorgänge pro Schicht im Uhrzeigersinn gleich der Anzahl der Druckvorgänge pro Schicht gegen den Uhrzeigersinn ist, und/oder
ii) in Schritt c) die Anzahl der Druckvorgänge pro Schicht im Uhrzeigersinn und die Anzahl der Druckvorgänge gegen den Uhrzeigersinn jeweils gleich 1 oder 2, vorzugsweise jeweils gleich 1, ist.

6. Verfahren gemäß einem der Ansprüche 1 bis 5, **dadurch gekennzeichnet, dass**
i) das Ausgangsmaterial in Strangform gedruckt wird, wobei der Strang des Ausgangsmaterials, das in der entsprechenden Schicht im Uhrzeigersinn gedruckt wird, mit dem Strang des Ausgangsmaterials, das in der einsprechenden Schicht gegen den Uhrzeigersinn gedruckt wird, auf jeweils einer Seite des entsprechenden Stranges in direktem Kontakt miteinander stehen, und/oder
ii) im Fall von 2 oder mehr Druckvorgängen pro Schicht jeweils im Uhrzeigersinn und gegen den Uhrzeigersinn, die Abfolge der Druckvorgänge so ist, das abwechselnd ein Druckvorgang im Uhrzeigersinn auf einen Druckvorgang gegen den Uhrzeigersinn folgt.

7. Verfahren gemäß einem der Ansprüche 1 bis 6, **dadurch gekennzeichnet, dass** der in Schritt c) gedruckte 3D-Gegenstand in mindestens einer Schicht mindestens teilweise eine Geometrie ausbildet, die mindestens eine Ecke aufweist, vorzugsweise bildet der 3D-Gegenstand in jeder Schicht mindestens teilweise, mehr bevorzugt vollständig, eine Geometrie aus, die mindestens eine Ecke aufweist.

8. Verfahren gemäß einem der Ansprüche 1 bis 7, **dadurch gekennzeichnet, dass**
i) der 3D-Gegenstand in mindestens einer Schicht, vorzugsweise in jeder Schicht, eine Geometrie ausbildet, die vollständig oder zumindest teilweise, vorzugsweise vollständig, als Vieleck, insbesondere als Dreieck, Viereck, Fünfeck oder Sechseck, ausgebildet ist, und/oder
ii) der 3D-Gegenstand als Quader ausgebildet ist, und/oder
iii) jede Schicht des 3D-Gegenstand die gleiche Geometrie ausbildet.

9. Verfahren gemäß einem der Ansprüche 1 bis 8, **dadurch gekennzeichnet, dass** das 3D-Druckverfahren und/oder der 3D-Drucker mit mindestens einem Computer gesteuert wird, vorzugsweise unter Verwendung von mindestens einer Slicersoftware.

10. Verfahren gemäß einem der Ansprüche 1 bis 9, **dadurch gekennzeichnet, dass**
i) in Schritt a) das Ausgangsmaterial als auf einer Rolle aufgewickeltes Filament bereitgestellt wird, und/oder
ii) in Schritt b) das Ausgangsmaterial, insbesondere das Filament, auf eine Temperatur oberhalb des Schmelzpunktes des im Ausgangsmaterial enthaltenen Binders erhitzt wird, vorzugsweise ist die Temperatur im Bereich von 100 bis 300 °C, insbesondere im Bereich von 140 bis 240 °C, und/oder
iii) der Druckkopf des 3D-Druckers eine Düse enthält, vorzugsweise eine Düse mit einem statischen Mischelement, insbesondere eine Düse mit einem statischen Mischelement, die als einkomponentigen Stück durch selektives Laserschmelzen (SLM) hergestellt ist, und/oder
iv) der in Schritt c) ausgebildete 3D-Gegenstand ein 3D-Grünkörper ist.

11. Verfahren gemäß einem der Ansprüche 1 bis 10, **dadurch gekennzeichnet, dass** im Anschluss an Schritt c) ein Schritt d) durchgeführt wird, wobei aus dem in Schritt c) gedruckten 3D-Gegenstand, vorzugsweise aus dem 3D-Grünkörper, Materialien herausgelöst werden unter Ausbildung eines 3D-Braunkörpers, vorzugsweise
i) werden Polymeranteile und/oder Binderanteile aus dem 3D-Gegenstand herausgelöst und/oder
ii) das Herauslösen erfolgt durch Säurebehandlung und/oder unterhalb des Schmelzpunkte der Polymer- oder der Binderanteile.

12. Verfahren gemäß einem der Ansprüche 1 bis 11, **dadurch gekennzeichnet, dass** im Anschluss an Schritt d) ein Schritt e) durchgeführt wird, wobei der in Schritt d) erhaltene 3D-Braunkörper einem Sinterungsprozess unterzogen wird unter Erhalt eines 3D-gesinterten Körpers.

13. 3D-Gegenstand erhältlich nach einem Verfahren gemäß einem der Ansprüche 1 bis 10, vorzugsweise ist der 3D-Gegenstand ein 3D-Grünkörper.

14. 3D-Braunkörper erhältlich nach einem Verfahren gemäß Anspruch 11.

15. 3D-gesinterter Körper erhältlich nach einem Verfahren gemäß Anspruch 12.
